(19) Europäisches Patentamt
European Patent Office
Office européen des brevets

(11) **EP 3 245 422 B1**

(12) **EUROPÄISCHE PATENTSCHRIFT**

(45) Veröffentlichungstag und Bekanntmachung des Hinweises auf die Patenterteilung:
**20.02.2019  Patentblatt 2019/08**

(21) Anmeldenummer: **15816663.7**

(22) Anmeldetag: **12.12.2015**

(51) Int Cl.:
*F16F 15/02* *(2006.01)*    *B60G 21/08* *(2006.01)*

(86) Internationale Anmeldenummer:
**PCT/EP2015/002498**

(87) Internationale Veröffentlichungsnummer:
**WO 2016/112940 (21.07.2016 Gazette 2016/29)**

(54) **VERFAHREN ZUR REGELUNG EINES NACH DEM GYROSKOPISCHEN PRINZIP ARBEITENDEN ROTATIONSDÄMPFERS**

METHOD FOR CONTROLLING A ROTATION DAMPER FUNCTIONING ACCORDING TO THE GYROSCOPIC PRINCIPLE

PROCÉDÉ DE RÉGULATION D'UN AMORTISSEUR DE ROTATION FONCTIONNANT SELON LE PRINCIPE GYROSCOPIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2015   DE 102015000524**

(43) Veröffentlichungstag der Anmeldung:
**22.11.2017   Patentblatt 2017/47**

(73) Patentinhaber:
• **Audi AG**
  **85045 Ingolstadt (DE)**
• **Karlsruher Institut für Technologie**
  **76131 Karlsruhe (DE)**

(72) Erfinder:
• **KOCH, Tilo**
  **85055 Ingolstadt (DE)**
• **SCHEURICH, Bastian**
  **74206 Bad Wimpfen (DE)**
• **GAUTERIN, Frank**
  **76829 Leinsweiler (DE)**
• **FREY, Michael**
  **76275 Ettlingen (DE)**

(56) Entgegenhaltungen:
**EP-A1- 0 650 890        DE-B3-102013 015 702
US-A1- 2004 244 513**

EP 3 245 422 B1

**Beschreibung**

Die Erfindung betrifft ein Verfahren zur Regelung eines nach dem gyroskopischen Prinzip arbeitenden Rotationsdämpfers für ein Kraftfahrzeug gemäß der im Oberbegriff des Patentanspruches 1 angegebenen Art.

Nach dem gyroskopischen Prinzip arbeitende Rotationsdämpfer stellen einen neuen Ansatz zur Dämpfung der Aufbauschwingung eines Kraftfahrzeugs dar. Der Rotationsdämpfer ist dabei konstruktiv so ausgeführt, dass die Drehachse einer kardanisch gelagerten, rotierenden Schwungmasse bei einer z.B. durch Bodenunebenheiten hervorgerufenen vertikalen Bewegung des Radträgers ausgelenkt wird. Die dabei entstehenden Präzessionsmomente sollen/können nun derart gedämpft werden, dass am Radträger ein Dämpfungseffekt entsteht. Das gyroskopische Prinzip dient dabei als Getriebe. Je nach Präzessionsmomente kann der Dämpfer mit sehr hoher Spreizung zwischen minimaler und maximaler Kennlinie arbeiten.

Ein gattungsgemäßes, sämtliche Merkmale des Oberbegriffs des Patentanspruches 1 aufweisendes Verfahren zur Regelung eines nach dem gyroskopischen Prinzip arbeitenden Rotationsdämpfers für ein Kraftfahrzeug ist aus der DE 10 2013 015 702 B3 bekannt.

Der Erfindung liegt die Aufgabe zugrunde, ein Verfahren zur Regelung eines nach dem gyroskopischen Prinzip arbeitenden Rotationsdämpfers für ein Kraftfahrzeug anzugeben.

Diese Aufgabe wird durch die Merkmale des Patentanspruches 1 gelöst.

Die Unteransprüche bilden vorteilhafte Weiterbildungen der Erfindung.

Der zu regelnde, nach dem gyroskopischen Prinzip arbeitende Rotationsdämpfer für ein Kraftfahrzeug umfasst eine über einen Antrieb angetriebene, um eine Drehachse mit einer Winkelgeschwindigkeit $\omega_\varphi$ rotierende Schwungmasse, die über ein erstes Lagerelement und ein zweites Lagerelement kardanisch gelagert ist. Hierbei ist die Schwungmasse um einen Drehwinkel $\varphi$ drehbar am ersten Lagerelement gelagert und das erste Lagerelement ist um eine orthogonal zur Drehachse der Schwungmasse ausgerichtete erste Achse um einen ersten Drehwinkel $\Theta$ drehbar am zweiten Lagermittel gelagert. Das zweite Lagermittel ist um eine orthogonal zur ersten Achse ausgerichtete zweite Achse um einen zweiten Drehwinkel $\Psi$ drehbar am Kraftfahrzeugaufbau gelagert. Weiterhin steht das erste Lagerelement mit einem Wellenantrieb in Wirkverbindung und das zweite Lagerelement ist über Mittel derart mit einem Radträger verbindbar, dass eine Ein-/Ausfederbewegung des Radträgers eine Drehung des zweiten Lagerelements relativ zum Kraftfahrzeugaufbau um den zweiten Drehwinkel $\psi$ bewirkt. Zudem umfasst der Rotationsdämpfer eine Reglereinrichtung zur Regelung des mit dem ersten Lagerelement in Wirkverbindung stehenden Wellenantriebs.

Erfindungsgemäß wird als Regelgröße ein am zweiten Lagerelement wirkendes Drehmoment $M_\psi$ und als Stellgröße ein über den Wellenmotor stellbares Drehmoment $M_\theta$ verwendet, wobei die Regelung der Stellgröße $M_\theta$ in Abhängigkeit vom Drehwinkel $\theta$ und Winkelgeschwindigkeit $\omega_\theta$ des ersten Lagerelements um die erste Achse durchgeführt wird.

Das erfindungsgemäße Verfahren zur Regelung erweist sich als vorteilhaft, da aufgrund der Regelung der Stellgröße $M_\theta$ in Abhängigkeit vom Drehwinkel $\theta$ und Winkelgeschwindigkeit $\omega_\theta$ eine schnelle Reaktion auf eingebrachte Störungen realisiert ist.

Vorzugsweise weist der bei der Regelung verwendete Regler eine PD-Charakteristik nach der Gleichung $M_\theta = c * \theta + k * \omega_\theta$ auf, wobei c und k vom Betrag her negativ sind.

Die Konstanten c und k werden dabei für eine weiche Dämpferkennlinie als auch eine harte Kennlinie ermittelt. Sowohl $|c| > |k|$ als auch $|c| < |k|$ sind denkbar; als pragmatisch erweist sich jedoch $|c| < |k|$.

Ein stochastisches Wechseln zwischen harter und weicher Kennlinie bei unterschiedlichen Bewegungszuständen des Dämpfers ist möglich. Damit ist eine Erfüllung von Forderungen eines Skyhook-Regelalgorithmus möglich.

Verbessert kann die Regelung werden, wenn zusätzlich die Winkel $\psi$ und/oder die Winkelgeschwindigkeit $\omega_\psi$ verwendet wird/werden. Die resultierenden Momente ergeben sich dann wie folgt:

$$M_\theta = c * \theta + k * \omega_\theta + a * \omega_\psi$$

und

$$M_\theta = c * \theta + k * \omega_\theta + a * \omega_\psi + b * \psi,$$

wobei a < 0 und b < 0.

Eine weitere Verbesserungsoptimierung ist die Berücksichtigung von translatorischen Beschleunigungen in x-, y-, und/oder z-Richtung. Für kleine Winkel $\theta$ kann die Beschleunigung in x-Richtung vernachlässigt werden. Für große Winkel $\theta$ ist die Beschleunigung in x-Richtung in der obigen Gleichung zu berücksichtigen. Gleiches gilt für Wanken und Nicken bzw. Beschleunigung in y-Richtung und z-Richtung. Die jeweiligen Positionen von x, y und z spielen hierbei keine Rolle.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

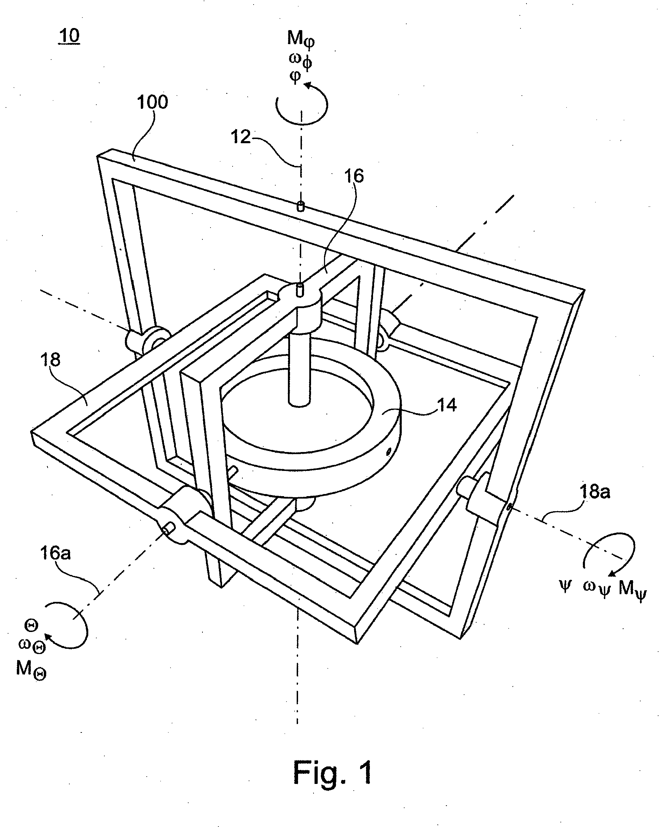

Fig. 1    eine schematische Darstellung der Funktionsweise des zu regelnden Rotationsdämpfers.

Fig. 1 zeigt einen insgesamt mit der Bezugsziffer 10 bezeichneten Rotationsdämpfer für ein Kraftfahrzeug in einer schematischen Darstellung.

Der Rotationsdämpfer 10 umfasst eine um eine Drehachse 12 mit der Winkelgeschwindigkeit $\omega_\varphi$ rotierende Schwungmasse 14, die über ein erstes Lagerelement 16 und ein zweites Lagerelement 18 kardanisch gelagert ist.

Hierbei ist die Schwungmasse 14 um den Drehwinkel $\varphi$ drehbar am ersten Lagerelement 16 gelagert und das erste Lagerelement 16 ist um eine orthogonal zur Drehachse 12 der Schwungmasse 14 ausgerichtete erste Achse 16a um einen Drehwinkel $\theta$ drehbar am zweiten Lagerelement 18 gelagert und das zweite Lagerelement 18 ist um eine orthogonal zur ersten Achse 16a ausgerichtete zweite Achse 18a um einen zweiten Drehwinkel $\psi$ drehbar am Kraftfahrzeugaufbau 100 gelagert.

Nicht dargestellt in der schematischen Darstellung gemäß Fig. 1 ist ein Antrieb der Schwungmasse 14, ein mit dem ersten Lagerelement über eine Antriebswelle in Wirkverbindung stehender Wellenantrieb sowie die Anbindung des zweiten Lagerelements 18 an einen Radträger. Auch auf eine Darstellung der Regelungseinrichtung wurde verzichtet.

Der schematisch dargestellte Rotationsdämpfer 10 verwendet den Effekt der Drehträgheit, um an geeigneter Stelle Kräfte in das Fahrwerk einzuleiten.

Diese Kräfte sollen die Funktion eines herkömmlichen Dämpferelements ersetzen und erweitern.

Nachfolgend eine kurze Erläuterung des Funktionsprinzips:

Im Anfangszustand rotiert die Schwungmasse 14 mit der Winkelgeschwindigkeit $\omega_\varphi$ um die Drehachse 12. Wenn an der ersten Achse 16a des ersten Lagerelements 16 ein Drehmoment $M_\Theta$ wirksam wird, entsteht aufgrund der Präzession ein Drehmoment $M_\Psi$ um die zweite Achse 18a. Die Momente führen zu einer Winkelgeschwindigkeit des ersten bzw. zweiten Lagerelements 16, 18. Ein Drehmoment $M_\Theta$ führt folglich zu einer Winkelgeschwindigkeit $\omega_\Theta$ des ersten Lagerelements 16. Diese Verdrehung verändert die Richtung des Winkelgeschwindigkeitsvektors $\omega_\varphi$ der Schwungmasse 14. Auf eine solche Störung reagiert die rotierende Schwungmasse 14 mit dem angesprochenen Präzessionsmoment $M_\Psi$. Da aber die Winkelgeschwindigkeit $\omega_\psi$ konstruktionsbedingt ebenfalls den Winkelgeschwindigkeitsvektor $\omega_\varphi$ der Schwungmasse 14 verändert, besteht ein direkter Einfluss aller drei Achsen. Das Einbringen von Energie in eine Achse zeigt eine Veränderung der Energie der beiden anderen Achsen. Wird das zweite Lagerelement 18 als Eingang betrachtet, so sind $M_\Psi$ und $\omega_\psi$ gleichgerichtet. An der ersten Achse 16a des ersten Lagerelements 16 kann diese Energie wieder entnommen werden, dabei sind $M_\Theta$ und $\omega_\Theta$ entgegengesetzt orientiert. Der umgekehrte Fall ist ebenso möglich. Gleichgerichtete Beträge von $M_\Theta$ und $\omega_\Theta$ führen zu ungleich gerichteten Beträgen von $M_\Psi$ und $\omega_\psi$. Wird nicht die gesamte Energie des Drehmoments $M_\Theta$ entnommen, so wird aufgrund des Rückkopplungseffekts die Winkelgeschwindigkeit $\omega_\varphi$ der Schwungmasse 14 steigen. Die überschüssige Energie wird in Form kinetischer Energie in der Drehbewegung der Schwungmasse 14 gespeichert. Das Übersetzungsverhältnis der einzelnen Momente wird dabei durch die Drehträgheiten der Schwungmasse 14 bestimmt.

Ist nun das zweite Lagerelement 18 derart mit einem Radträger verbunden, so dass eine Ein-/Ausfederbewegung des Radträgers ein Drehmoment $M_\Psi$ und eine Winkelgeschwindigkeit $\omega_\psi$ des zweiten Lagerelement 18 um die zweite Achse 18a bewirken, entsteht eine Relativbewegung des ersten Lagerelements 16 um die erste Achse 16a. Wird zur Winkelgeschwindigkeit $\omega_\Theta$ des ersten Lagerelements 16 ein Gegenmoment $M_\Theta$ aufgebracht, so wird die Relativbewegung des Lagerelements 16 um die erste Achse 16a gedämpft. Dies führt wiederum zum Dämpfen der Winkelgeschwindigkeit $\omega_\psi$ des zweiten Lagerelements 18 um die zweite Achse 18a. Je nach Größe des Betrages des Gegenmoments $M_\Theta$ fällt die Dämpfung stärker oder schwächer aus.

Wird im Gegensatz dazu ein der Winkelgeschwindigkeit $\omega_\Theta$ gleichgerichtetes Moment $M_\Theta$ aufgebracht, führt dies zu einer Unterstützung der Ein-/Ausfederbewegung. D.h. der Rotationsdämpfer 10 kann auch als Aktuator verwendet werden, um aktiv Vertikalkräften am Radträger zu stellen und somit Funktionen eines aktiven Fahrwerks zu übernehmen.

Gemäß dem erfindungsgemäßen Verfahren werden zur Erzielung obiger Effekte als Regelgröße ein am zweiten Lagerelement 18 wirkendes wirkendes Drehmoment $M_\psi$ und als Stellgröße ein über den Wellenmotor stellbares Drehmoment $M_\theta$ verwendet wird. Hierbei wird die Regelung der Stellgröße $M_\theta$ in Abhängigkeit vom Drehwinkel $\theta$ und Winkelgeschwindigkeit $\omega_\theta$ des ersten Lagerelements 16 um die erste Achse 16a durchgeführt wird.

**Patentansprüche**

1. Verfahren zur Regelung eines nach dem gyroskopischen Prinzip arbeitenden Rotationsdämpfers (10) für ein Kraftfahrzeug, wobei der Rotationsdämpfer (10) eine über einen Antrieb angetriebene, um eine Drehachse (12) mit einer Winkelgeschwindigkeit ($\omega_\varphi$) rotierende Schwungmasse (14) umfasst, die über ein erstes Lagerelement (16) und ein zweites Lagerelement (18) kardanisch gelagert ist, wobei die Schwungmasse (14) um einen Drehwinkel ($\varphi$) drehbar am ersten Lagerelement (16) gelagert ist und das erste Lagerelement (16) um eine orthogonal zur Drehachse (12) der Schwungmasse (14) ausgerichtete erste Achse (16a) um einen ersten Drehwinkel ($\theta$) drehbar am zweiten Lagerelement (18) gelagert ist und das zweite Lagerelement (18) um eine orthogonal zur ersten Achse (16a) ausgerichtete zweite Achse (18a) um einen zweiten Drehwinkel ($\psi$) drehbar gelagert ist, wobei das erste Lagerelement (16) mit einem Wellenantrieb in Wirkverbindung steht und das zweite Lagerelement (18) mit einem Radträger verbindbar ist, so dass eine Ein-/Ausfederbewegung des Radträgers eine Drehung des zweiten Lagerelements (18) um den zweiten Drehwinkel ($\psi$) bewirkt, wobei als Regelgröße ein am zweiten Lagerelement (18) wirkendes Drehmoment ($M_\psi$) und als Stellgröße ein über den Wellenantrieb stellbares Drehmoment ($M_\theta$) verwendet wird, **dadurch gekennzeichnet, dass** die Regelung der Stellgröße ($M_\theta$) in Abhängigkeit vom ersten Drehwinkel ($\theta$) und einer Winkelgeschwindigkeit ($\omega_\theta$) des ersten Lagerelements (16) um die erste Achse (16a) durchgeführt wird.

2. Verfahren zur Regelung eines nach dem gyroskopischen Prinzip arbeitenden Rotationsdämpfers nach Anspruch 1, **dadurch gekennzeichnet, dass** die Regelung der Stellgröße ($M_\theta$) mit einem Regler mit PD-Charakteristik nach der Gleichung

$$M_\theta = c * \theta + k * \omega_\theta, \text{ wobei } |c| \text{ und } |k| < 0$$

wobei |c| und |k| < 0
durchgeführt wird.

3. Verfahren zur Regelung eines nach dem gyroskopischen Prinzip arbeitenden Rotationsdämpfers nach Anspruch 2, **dadurch gekennzeichnet, dass** bei der Regelung der Stellgröße ($M_\theta$) zusätzlich noch der Drehwinkel ($\psi$) und/oder die Winkelgeschwindigkeit ($\omega_\psi$) des zweiten Lagerelements (18) nach der Gleichung

$$M_\theta = c * \theta + k * \omega_\theta + a * \omega_\psi,$$

und/oder

$$M_\theta = c * \theta + k * \omega_\theta + a * \omega_\psi + b * \psi,$$

wobei |a| und |b| < 0 oder a oder b = 0
berücksichtigt werden.

4. Verfahren zur Regelung eines nach dem gyroskopischen Prinzip arbeitenden Rotationsdämpfers nach Anspruch 2 oder 3, **dadurch gekennzeichnet, dass** bei der Regelung der Stellgröße ($M_\theta$) noch eine translatorische Beschleunigung in x-, y- und/oder z-Richtung berücksichtigt wird.

5. Verfahren zur Regelung eines nach dem gyroskopischen Prinzip arbeitenden Rotationsdämpfers nach einem der Ansprüche 2 bis 4, **dadurch gekennzeichnet, dass** bei der Regelung der Stellgröße ($M_\theta$) eine rotatorische Winkelposition, Winkelgeschwindigkeit und /oder Winkelbeschleunigung um die x-, y- und/oder z-Richtung der Karosserie (100) zur Straße bzw. dem Untergrund berücksichtigt wird.

**Claims**

1. Method for regulating a rotational damper (10) operating according to the gyroscopic principle for a motor vehicle, wherein the rotational damper (10) comprises an oscillating weight (14) driven via a drive and rotating around a rotational axis (12) at an angular speed ($\omega_\varphi$) which is cardanically mounted via a first bearing element (16) and a second bearing element (18), wherein the oscillating weight (14) is mounted on the first bearing element (16) so as to be rotatable by a rotational angle (φ) and the first bearing element (16) is mounted on the second bearing element (18) so as to be rotatable by a first rotational angle (θ) around a first axis (16a) aligned orthogonally to the rotational axis (12) of the oscillating weight (14) and the second bearing element (18) is mounted so as to be rotatable by a second rotational angle (Ψ) around a second axis (18a) aligned orthogonally to the first axis (16a), wherein the first bearing element (16) is operatively connected to a shaft drive and the second bearing element (18) is connectable to a hub carrier such that a compression/extension movement of the hub carrier causes a rotation of the second bearing element (18) by the second rotational angle (Ψ), wherein a torque ($M_\Psi$) acting on the second bearing element (18) is used as a regulating variable and a toque (Me) actuatable via the shaft drive is used as the actuating variable, **characterised in that** the regulation of the actuating variable ($M_\theta$) is carried out as a function of the first rotational angle (θ) and an angular speed ($\omega_\Phi$) of the first bearing element (16) around the first axis (16a).

2. Method for regulating a rotational damper operating according to the gyroscopic principle according to claim 1, **characterised in that** the regulation of the actuating variable ($M_\theta$) is carried out with a regulator with a PD characteristic according to the equation Me = c * θ + k* $\omega_\Phi$, wherein |c| and |k| <0.

3. Method for regulating a rotational damper operating according to the gyroscopic principle according to claim 2, **characterised in that** in the case of the regulation of the actuating variable (Me), the rotational angle (Ψ) and/or the angular speed ($\omega_\Psi$) of the second bearing element (18) are taken into account according to the equation

$$M_\theta = c * \theta + k * \omega_\Phi + a * \omega_\Psi,$$

and/or

$$M_\theta = c * \theta + k * \omega_\Phi + a * \omega_\Psi + b * \Psi,$$

wherein |a| and |b| < 0 or a or b = 0.

4. Method for regulating a rotational damper operating according to the gyroscopic principle according to claim 2 or 3, **characterised in that** in the case of the regulation of the actuating variable ($M_\theta$), a translatory acceleration is still taken into account in the x, y and/or z direction.

5. Method for regulating a rotational damper operating according to the gyroscopic principle according to any one of claims 2 to 4, **characterised in that** in the case of the regulation of the actuating variable ($M_\theta$), a rotatory angular position, angular speed and/or angular acceleration is taken into account around the x, y and/or z direction of the body (100) towards the street or ground.

**Revendications**

1. Procédé de régulation d'un amortisseur de rotation (10) fonctionnant selon le principe gyroscopique pour un véhicule automobile, dans lequel l'amortisseur de rotation (10) comprend une masse d'inertie (14) entraînée par le biais d'un entraînement et tournant autour d'un axe de rotation (12) avec une vitesse angulaire ($\omega_\varphi$), qui est logée à la Cardan via un premier élément de palier (16) et un deuxième élément de palier (18), dans lequel la masse d'inertie (14) est logée au niveau du premier élément de palier (16) en rotation d'un angle de rotation (φ) et le premier élément de palier (16) est logé au niveau du deuxième élément de palier (18) en rotation d'un premier angle de rotation (θ) autour d'un premier axe (16a) orienté orthogonalement par rapport à l'axe de rotation (12) de la masse d'inertie (14) et le deuxième élément de palier (18) est logé en rotation d'un deuxième angle de rotation (ψ) autour d'un deuxième axe (18a) orienté orthogonalement par rapport au premier axe (16a), dans lequel le premier élément de palier (16) est en liaison active avec un entraînement d'arbre et le deuxième élément de palier (18) peut être relié à un support de roue, de sorte qu'un mouvement de compression/débattement du support de roue provoque une rotation du deuxième élément de palier (18) du deuxième angle de rotation (ψ), dans lequel un couple ($M_\psi$) agissant au niveau du deuxième élément de palier (18) est utilisé comme variable réglée et un couple ($M_\theta$) réglable par le biais de l'entraînement d'arbre est utilisé comme variable réglante, **caractérisé en ce que** la régulation de la variable réglante ($M_\theta$) est réalisée en fonction du premier angle de rotation (θ) et d'une vitesse angulaire ($\omega_\theta$) du premier

élément de palier (16) autour du premier axe (16a).

2. Procédé de régulation d'un amortisseur de rotation fonctionnant selon le principe gyroscopique selon la revendication 1, **caractérisé en ce que** la régulation de la variable réglante ($M_\theta$) est effectuée avec un régulateur avec caractéristique PD selon l'équation

$$M_\theta = c * \theta + k * \omega_\theta, \text{ dans lequel et } |c| \text{ et } |k| < 0.$$

dans lequel et $|c|$ et $|k| < 0$.

3. Procédé de régulation d'un amortisseur de rotation fonctionnant selon le principe gyroscopique selon la revendication 2, **caractérisé en ce que** lors de la régulation de la variable réglante ($M_\theta$), l'angle de rotation ($\psi$) et/ou la vitesse angulaire ($\omega_\psi$) du deuxième élément de palier (18) sont également pris en compte selon l'équation

$$M_\theta = c * \theta + k * \omega_\theta + a * \omega_\psi,$$

et/ou

$$M_\theta = c * \theta + k * \omega_\theta + a * \omega_\psi + b * \psi,$$

dans lequel et $|a|$ et $|b| < 0$ ou a ou b = 0.

4. Procédé de régulation d'un amortisseur de rotation fonctionnant selon le principe gyroscopique selon la revendication 2 ou 3, **caractérisé en ce que** lors de la régulation de la variable réglante ($M_\theta$), une accélération en translation dans la direction x, y et/ou z est prise en compte.

5. Procédé de régulation d'un amortisseur de rotation fonctionnant selon le principe gyroscopique selon l'une quelconque des revendications 2 à 4, **caractérisé en ce que** lors de la régulation de la variable réglante ($M_\theta$), une position angulaire de rotation, une vitesse angulaire et/ou une accélération angulaire autour de la direction x, y et/ou z de la carrosserie (100) par rapport à la route ou au sol est prise en compte.

$M_\varphi$
$\omega_\phi$
$\varphi$

10

100

12

16

18

14

18a

16a

$\Theta$
$\omega_\Theta$
$M_\Theta$

$\psi \quad \omega_\psi \quad M_\psi$

# Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013015702 B3